(19) **Europäisches Patentamt**

**European Patent Office**

**Office européen des brevets**

(11) **EP 1 630 620 A1**

(12) **EUROPEAN PATENT APPLICATION**
published in accordance with Art. 158(3) EPC

(43) Date of publication:
**01.03.2006 Bulletin 2006/09**

(51) Int Cl.:
*G03G 9/087* (1990.01)  *C08J 3/24* (1974.07)

(21) Application number: **04735132.5**

(22) Date of filing: **27.05.2004**

(86) International application number:
**PCT/JP2004/007663**

(87) International publication number:
**WO 2004/107058 (09.12.2004 Gazette 2004/50)**

(84) Designated Contracting States:
**DE FR GB**

(30) Priority: **29.05.2003 JP 2003153550**

(71) Applicant: **Mitsui Chemicals, Inc.**
**Tokyo 105-7117 (JP)**

(72) Inventors:
• **SAKATA, Kazuya**
**Sodegaura-shi, Chiba 299-0265 (JP)**

• **YOSHIDA, Takeshi**
**Sodegaura-shi, Chiba 299-0265 (JP)**

(74) Representative: **HOFFMANN EITLE**
**Patent- und Rechtsanwälte**
**Arabellastrasse 4**
**81925 München (DE)**

(54) **BINDER RESIN FOR TONER AND TONER FOR ELECTROPHOTOGRAPHY**

(57) An object of the present invention is to provide a binder resin for a toner which is excellent in fixing properties and offset resistance even when used in a high-speed copier and is also excellent in suitability for grindability, development durability and the like, and a toner for electrophotography. The binder resin for a toner comprises a resin which is obtained by mixing a vinyl polymer with a crosslinked resin obtained by reacting a vinyl polymer having a specific molecular weight and a specific content of a functional group with a crosslinking agent, and which has a specific gel portion. As a result, the above object has been achieved. A toner using the binder resin is excellent in performances including fixing properties and the like even when used in a high-speed copier. Even when continuously used for a long time in a copier, the toner gives electrophotographic prints with satisfactory reproduction.

EP 1 630 620 A1

**Description**

TECHNICAL FIELD

The present invention relates to a binder resin for a toner used for development of an electrostatic image in electrophotography, electrostatic recording, electrostatic printing and the like. More specifically, the invention relates to a toner for electrophotography which can be used for a high-speed copier and which is excellent in high resolution, high picture quality and grindability.

BACKGROUND ART

In general, an electrophotography in a PPC (Plain Paper Copy) copier or printer is carried out in a method described below. First, an electrostatic latent image is formed on a photo-sensitive material, the latent image is developed by using a toner, the toner image is transferred onto a sheet to be fixed such as paper or the like, and then the transferred toner image is fixed by heating with a heat roll. Since the fixation is carried out under heat and pressure according to the method, it is performed in a short period of time and with a very high thermal efficiency, thereby achieving a very good fixing efficiency. However, though having a good thermal efficiency, the heat roll method has a problem of a so-called offset phenomenon. Namely, since a toner is contacted with the surface of the heat roll in the melt state of the toner, the toner is transferred by adhering on the surface of the heat roll, and the transferred toner is transferred again on the next sheet to be fixed to contaminate it.

In order to prevent such an offset phenomenon, for example, a method of applying silicone oil onto a cloth or paper on the surface of the heat roll has been suggested. However, the method requires more complicated devices, for instance, a liquid supplier for preventing offset or the like, thereby causing complicated maintenance or management to result in high cost, or causing a new problem of contamination of the inner part of the instrument by evaporation of silicone oil or the like due to the heat. For this reason, a development of a toner for high-speed machine in a method which does not require application of silicone oil or the like (an oil-free fixing method) has been in demand.

On the other hand, as a method to prevent offset in the development of toners for the oil-free fixing method, a number of toners using high molecular weight polymers or crosslinked polymers have been suggested. For example, a method of using a crosslinked polymer prepared by emulsion polymerization as described in JP1985-36582B, and a method of using a crosslinked polymer prepared by suspension polymerization according to USP 4,966,829 have been disclosed. Though having an advantage of high availability of the crosslinked polymers or the high molecular weight polymers, the methods mentioned above employ a dispersant or a dispersing aid which is apt to absorb moisture during the preparation, thereby causing an adverse effect to its electric properties, in particular, its charge stability, and removal of the agent is not simple either.

Thus, the present inventors have made an effort to develop a method to obtain high molecular weight resins by means of solution polymerization, which does not require a dispersant or the like (USP 4,963,456, USP 5,084,368 and the like). However, such a method was insufficient to completely overcome the problem of offset.

In order to obtain the crosslinked polymers, a method comprising reacting a monomer containing a glycidyl group with a resin containing a reactive group such as a resin having a COOH group has been suggested in JP1985-38700B, JP1994-11890A, JP1994-222612A, JP1997-319140A and the like. In those publications, it is disclosed that a binder resin for a toner exhibiting excellent balance between fixing properties, offset resistance and anti-blocking properties is obtained by controlling the molecular weight, Tg and the amount of reactive groups in respective resins.

In the meantime, since copiers aim to have higher speed in these days, the speed of a fixing roll inevitably becomes faster, and a toner to be fixed by means of heating in a short period of time is required. In order to fix it in as short time as possible, the toner should have high fluidity upon melting. To enhance the fixing properties, it is generally effective to lower the glass transition temperature (hereinafter referred to as "Tg"), but this causes an undesirable phenomenon of blocking (forming a mass) of the toner during the storage.

Furthermore, the requirements from the market these days are directed to higher speed and additional saving of energy, so that even lower fixing temperature is required from the viewpoints of shortened heating time due to such high speed, saving of energy and the like. However, any binder resin for a toner which satisfies such requirements has not been reported up to the present.

DISCLOSURE OF THE INVENTION

Accordingly, an object of the present invention is to provide a binder resin for a toner which has more excellent low-temperature fixing properties and also excellent balance between the fixing properties and offset resistance, so as to satisfy the requirements of higher speed and energy saving from the copier market as described above, and a toner.

In order to satisfy such requirements, the present inventors have conducted an extensive study and as a result, have found that a toner using a binder resin for a toner can achieve the above object. Such a binder resin is obtained by crosslinking a crosslinkable compound with a resin having a reactive group, in which a crosslinked resin having at least a predetermined gel portion is mixed with a vinyl polymer.

That is, the first aspect of the present invention is a binder resin for a toner comprising a crosslinked resin (C) which is obtained by the reaction of a crosslinking agent (A) with a vinyl polymer (B) satisfying the requirements (I) to (III) as described below, and contains a gel portion of from 1 to 50%, and a vinyl polymer (D).

(I) The vinyl polymer (B) comprises a vinyl polymer (H) and a vinyl polymer (L), and the weight ratio (H)/(L) is from 5/95 to 50/50.

(II) The vinyl polymer (H) has a weight average molecular weight of more than 50,000 and not more than 1,000,000, and the content of the functional group selected from an OH group, a COOH group, an acid anhydride group and an amino group is from 0.1 to 2 mole per 1 kg of the vinyl polymer (H).

(III) The vinyl polymer (L) has a weight average molecular weight of not less than 4,000 and not more than 50,000, and the content of the functional group selected from an OH group, a COOH group, an acid anhydride group and an amino group is less than 0.7 mole per 1 kg of the vinyl polymer (L).

The second aspect of the present invention is a toner for electrophotography comprising the binder resin for a toner as described above.

BEST MODE FOR CARRYING OUT THE INVENTION

The binder resin for a toner according to the present invention is obtained by mixing a crosslinked resin (C) which is obtained by the reaction of a crosslinking agent (A) with a vinyl polymer (B) having a functional group selected from a hydroxyl group (OH), a carboxylic group (COOH), an acid anhydride group and an amino group, with a vinyl polymer (D). In the present invention, polymerization may include the meaning of copolymerization, and a polymer may have the meaning of a copolymer. Furthermore, the styrene acrylic type resin according to the present invention means a copolymer of a styrene type compound and a (meth)acrylic acid and/or a (meth)acrylic ester compound.

The crosslinking agent (A) according to the present invention is not particularly restricted as far as it has a functional group which reacts with the vinyl polymer (B) to be described below. As the functional group reacting with the vinyl polymer (B), an epoxy group is preferable. A more preferable example of the crosslinking agent (A) includes a vinyl resin (A1) containing a glycidyl group. The vinyl resin (A1) containing a glycidyl group preferably has the epoxy value in the range of 0.005 to 0.1 equivalent/100 g. By virtue of the epoxy value within this range, gel is sufficiently produced, and the gel is characterized in being difficult to be cleaved in the process for preparing a toner. Thus, a toner having offset resistance and development durability is obtained. Incidentally, in the present invention, the epoxy value refers to the gram equivalent number of an epoxy group contained in 100 g of an epoxy resin.

The vinyl resin (A1) containing a glycidyl group according to the present invention is obtained, for example, by polymerizing a monomer having a polymerizable double bond with a monomer having a glycidyl group and a polymerizable double bond.

As the monomer having a polymerizable double bond, styrene type compounds, acrylic esters, methacrylic esters, diesters of an unsaturated dibasic acid, acrylonitrile, methacrylonitrile, amides and the like can be preferably cited.

As the styrene type compound, styrene, p-methylstyrene, $\alpha$-methylstyrene, vinyl toluene and the like can be preferably cited.

As the acrylic ester, preferable are methyl acrylate, ethyl acrylate, propyl acrylate, butyl acrylate, octyl acrylate, cyclohexyl acrylate, stearyl acrylate, benzyl acrylate, furfuryl acrylate, hydroxyethyl acrylate, hydroxybutyl acrylate, dimethylaminomethyl acrylate, dimethylaminoethyl acrylate and the like.

As the methacrylic ester, preferable are methyl methacrylate, ethyl methacrylate, propyl methacrylate, butyl methacrylate, octyl methacrylate, cyclohexyl methacrylate, stearyl methacrylate, benzyl methacrylate, furfuryl methacrylate, hydroxyethyl methacrylate, hydroxybutyl methacrylate, dimethylaminomethyl methacrylate, dimethylaminoethyl methacrylate and the like.

As the diester of an unsaturated dibasic acid, preferable are dialkyl fumarate, dialkyl maleate and the like. As the dialkyl fumarate, preferable are dimethyl fumarate, dibutyl fumarate, dioctyl fumarate and the like. As the dialkyl maleate, preferable are dimethyl maleate, dibutyl maleate, dioctyl maleate and the like.

As the amides, preferable are acrylamide, methacrylamide, N-substituted acrylamide, N-substituted methacrylamide and the like.

Among these, particularly preferable examples of the vinyl monomer include styrenes, acrylic esters, methacrylic esters, dialkyl fumarate esters, acrylonitrile, acrylamide, methacrylamide and the like.

These compounds may be used in combination of two or more kinds.

On the other hand, concrete examples of the monomer having a glycidyl group and a polymerizable double bond preferably include glycidyl acrylate, β-methylglycidyl acrylate, glycidyl methacrylate, β-methylglycidyl methacrylate and the like. Glycidyl methacrylate and β-methylglycidyl methacrylate are particularly preferable.

The method for polymerizing these compounds is not particularly restricted, but suspension polymerization, emulsion polymerization, .bulk polymerization, solution polymerization or the like can be employed. In particular, bulk polymerization and solution polymerization, which can be performed without any dispersant or a dispersing aid, are preferable.

As the solvent for the solution polymerization according to the present invention, aromatic hydrocarbons are preferable. Examples of the aromatic hydrocarbon include benzene, toluene, ethylbenzene, o-xylene, m-xylene, p-xylene, cumene and the like. These can be used singly or in combination thereof. The molecular weight can also be adjusted by the use of other solvent(s).

Polymerization may be carried out by using a polymerization initiator, or by so-called thermal polymerization without using a polymerization initiator. The polymerization initiator is not particularly restricted as far as it can be used as a radical polymerization initiator.

Preferred examples of the polymerization initiator include azo type initiators, ketone peroxides, peroxyketals, hydroperoxides, dialkyl peroxides, diacyl peroxides, peroxydicarbonates, sulfonyl peroxides, and peroxyesters.

As the azo type initiator, preferable are 2,2'-azobisisobutyronitrile, 2,2'-azobis(4-methoxy-2,4-dimethylvaleronitrile), dimethyl-2,2'-azobisisobutyrate, 1,1'-azobis(1-cyclohexanecarbonitrile) and the like.

As the ketone peroxide, preferable are methylethylketone peroxide, acetylacetone peroxide, cyclohexanone peroxide and the like.

As the hydroperoxide, preferable are 1,1-bis(t-butylperoxy)-3,3,5-trimethylcyclohexane and the like.

As the hydroperoxide, preferable are t-butylhydroperoxide and the like.

As the dialkyl peroxide, preferable are di-t-butyl peroxide, t-butylcumyl peroxide, dicumyl peroxide, 2,5-dimethyl-2,5-di(t-butylperoxy)hexane and the like.

As the diacyl peroxide, preferable are isobutyryl peroxide, octanoyl peroxide, decanoyl peroxide, lauroyl peroxide and the like.

As the peroxydicarbonate, preferable are diisopropyl peroxydicarbonate, di-2-ethylhexyl peroxydicarbonate, di-n-propyl peroxydicarbonate, di-2-ethoxyethyl peroxycarbonate and the like.

As the sulfonyl peroxide, preferable are acetylcyclohexyl sulfonyl peroxide and the like.

As the peroxyester, preferable are t-butyl peroxyacetate, t-butyl peroxyisobutyrate, t-butyl peroxyneodecanoate, cumyl peroxyneodecanoate, t-butyl peroxy-2-ethylhexanoate and the like.

These compounds can be used singly or in combination of two or more kinds.

The polymerization initiator used in the present invention can be suitably selected depending on the type and amount of the monomer to be polymerized, reaction temperature, concentration of the monomer and the like. The amount thereof is preferably from 0.01 to 10 weight parts per 100 weight parts of the monomer as a raw material.

As the crosslinking agent (A) according to the present invention, a crosslinking agent having a styrene acrylic type resin structure is particularly preferable. The styrene acrylic type resin has advantages such that polymerization. can be easily controlled so that the physical properties can be freely designed, and the cost is cheap.

The vinyl polymer (B) according to the present invention comprises a vinyl polymer (H) and a vinyl polymer (L) to be described below.

The vinyl polymer (B) can be obtained by mixing the vinyl polymer (H) with the vinyl polymer (L) after individually preparing the polymers (H and L).

The vinyl polymer (H) can be preferably prepared by in combination of bulk polymerization and solution polymerization. Any conventional methods of bulk polymerization in the prior art can be employed. The reaction temperature is different depending on the type of the monomer having a polymerizable double bond, but it is preferably in the range of 90 to 150°C, and more preferably in the range of 100 to 140°C. Any conventional methods of solution polymerization in the prior art can be employed. The reaction temperature is different depending on the types of the monomer having a polymerizable double bond, a polymerization initiator and a solvent, but it is preferably in the range of 130 to 210°C, and more preferably in the range of 140 to 200°C. To prepare the vinyl polymer (L), solution polymerization is desirable. As the method for solution polymerization, the method described for the aforementioned vinyl polymer (H) can be preferably cited.

The vinyl polymer (B) of the present invention is preferably obtained by polymerizing the aforementioned compound having a polymerizable double bond. At this time, it is also possible to carry out copolymerization with a monomer having a functional group selected from an OH group, a COOH group, an acid anhydride group and an amino group, and a polymerizable double bond, if desired. The polymerization method and polymerization conditions are identical to those of the above crosslinking agent (A).

As the monomer having a functional group selected from an OH group, a COOH group, an acid anhydride group and an amino group, and a polymerizable double bond, the following compounds can be specifically cited.

Preferred examples of the monomer having a COOH group or an acid anhydride group include acrylic acid, methacrylic acid, maleic acid, fumaric acid, cinnamic acid, mono esters of an unsaturated dibasic acid, maleic anhydride, itaconic anhydride and the like. Preferred examples of mono esters of an unsaturated dibasic acid include monomethyl fumarate, monoethyl fumarate, monopropyl fumarate, monobutyl fumarate, monooctyl fumarate, monomethyl maleate, monoethyl maleate, monopropyl maleate, monobutyl maleate, monooctyl maleate and the like. Particularly preferable are acrylic acid, methacrylic acid, fumaric acid, monomethyl fumarate, monoethyl fumarate, monopropyl fumarate, monobutyl fumarate, monooctyl fumarate, maleic anhydride, itaconic anhydride and the like.

Furthermore, as the monomer having an OH group, there can be exemplified, for example, the mono esters obtained by reacting the aforementioned carboxylic acid or the acid anhydride with a polyhydric alcohol.

Examples of the polyhydric alcohol include alkyl diols, alicyclic diols, adducts of alkylene oxide, aromatic diols and the like.

Examples of the alkyl diol include ethylene glycol, 1,2-propylene glycol, 1,3-propylene glycol, 1,3-butylene glycol, 1,4-butylene glycol, 2,3-butanediol, diethylene glycol, triethylene glycol, dipropylene glycol, 1,5-pentanediol, 1,6-hexanediol, neopentyl glycol, 2-ethyl-1,3-hexanediol and the like.

Examples of the alicyclic diol include, hydrogenated bisphenol A, cyclohexanedimethanol and the like.

Examples of the alkylene oxide adduct include the reaction product of bisphenol F or bisphenol S with ethylene oxide, propylene oxide and the like.

Examples of the aromatic diol include dicarboxylic acid lower alcohol esters such as bishydroxybutyl terephthalic acid and the like.

Furthermore, an adduct or ester of a bisphenol A derivative, such as an adduct of bisphenol A alkylene oxide with the aforementioned carboxylic acid or the acid anhydride can also be cited. In addition, an ester of the above carboxylic acid or the acid anhydride with a trihydric or higher polyol such as glycerin, 2-methylpropanetriol, trimethylolpropane, trimethylolethane, sorbit, sorbitan or the like can be cited.

Examples of the monomer containing an amino group include N-methylamino(meth)acrylate, N-ethylamino (meth)acrylate, N-propynoamino(meth)acrylate, N-butylamino(meth)acrylate and the like.

The vinyl polymer (H) of the present invention has a weight average molecular weight of more than 50,000 and not more than 1,000,000, preferably from 100,000 to 700,000 and more preferably from 300,000 to 600,000, and the content of the functional group selected from an OH group, a COOH group, an acid anhydride group and an amino group of from 0.1 to 2 mole/kg resin, preferably from 0.1 to 1 mole/kg resin. Namely, the vinyl polymer (H) is preferably a component, which reacts mainly with the crosslinking agent (A) to make a higher molecular weight polymer, or form a gel. If the weight average molecular weight of the vinyl polymer (H) is within the above range, the vinyl polymer (H) reacts with the crosslinking agent (A) to be a higher molecular weight polymer or to be easily gelated. Thus, such a polymer is preferred from the viewpoints that the mechanical strength of the resin is increased and the viscosity thereof becomes high after the reaction. Accordingly, the toner thus obtained exhibits sufficient durability and offset resistance. If the content of the functional group in the vinyl polymer (H) is within the above range, it is desirable in that the resin after reacting with the crosslinking agent (A) has an appropriate viscosity. Thus, the obtained toner exhibits sufficient offset resistance, fixing properties and grindability.

The vinyl polymer (L) has a weight average molecular weight of not less than 4,000 and not more than 50,000, preferably not less than 5,000 and not more than 30,000, and more preferably not less than 8,000 and not more than 20,000, and the content of the functional group selected from an OH group, a COOH group, an acid anhydride group and an amino group is less than 0.7 mole/kg resin, preferably less than 0.5 mole/kg resin, and more preferably less than 0.3 mole/kg resin. Namely, it is desirable in that the vinyl polymer (L) hardly reacts with the crosslinking agent (A). If the weight average molecular weight is within the above range, it is desirable in that a toner having good durability, offset resistance, fixing properties and grindability can be obtained. Thus, appropriate mechanical strength and viscosity of the resin can be achieved. If the content of the functional group is within the above range, it is desirable in that low molecular weight components remain in an appropriate amount even after the reaction with the crosslinking agent (A), thus exhibiting sufficient fixing properties.

The vinyl polymer (B) according to the present invention preferably has a styrene acrylic type resin structure, in particular, from the viewpoints of the reaction control, the freedom of design of physical properties, the cost and the like.

The number average molecular weight or weight average molecular weight in the present invention is measured by the gel permeation chromatography (GPC), which is the molecular weight calculated with reference to the calibration curve produced by the use of the monodispersed standard polystyrene. The measuring conditions are as follows:

GPC apparatus: SHODEX GPC SYSTEM-21 (High performance liquid chromatography; manufactured by Showa Denko K.K.)

Detector: SHODEX RI SE-31 (Device for measuring a refractive index, manufactured by Showa Denko K.K.)

Column: Two pieces of SHODEX GPCA-80M, and a piece of KF-802 were connected in serial, prior to use. (all manufactured by Showa Denko K.K.)

Solvent: Tetrahydrofuran (THF)

Flow rate: 1.2 ml/min.
Sample concentration: 0.002 g - resin / ml - THF (filtered by the use of a membrane filter for removing an insoluble part, waste and the like, immediately before the measurement)
Sample amount: 100 μl

The binder resin for a toner according to the present invention comprises a resin obtained by mixing a crosslinked resin (C) obtained from a crosslinking agent (A) and a vinyl polymer (B), and containing a gel portion, with a vinyl polymer (D). As the vinyl polymer (D), any conventional vinyl polymer used as a binder resin can be used without any restriction. Examples thereof include styrene type copolymers or (meth)acrylic acid (ester) type copolymers, and preferably so-called styrene acrylic type resins. The other preferred example thereof includes the above vinyl polymer (B).

As the method for reacting the crosslinking agent (A) with the vinyl polymer (B), it is desirable to melt knead the crosslinking agent (A) and the vinyl polymer (B). Any conventional methods for heat melting can be adopted, but a method of using a twin screw kneader is preferable. For example, the method comprises mixing the vinyl polymer (B) with the crosslinking agent (A) by the use of a Henschel mixer or the like, and then reacting them while melt kneading by the use of a twin screw kneader. The reaction temperature is different depending on the type of the crosslinking agent (A) or the vinyl polymer (B), but it is in the range of 100 to 240°C, and preferably in the range of 150°C to 220°C. In addition to the twin screw kneader, a reaction container equipped with a stirrer or the like can also be used.

The crosslinked resin (C) according to the present invention contains the gel component. The content of the gel component in the crosslinked resin (C) (gel portion (%)) is from 1 to 50 weight %, preferably from 3 to 35 weight %, and more preferably from 5 to 30 weight %. If the content of the gel component is within the above range, it is desirable in achieving good offset resistance and low-temperature fixing properties.

In the present invention, gel refers to the insoluble portion of ethyl acetate in the resin. The content of the gel portion in the present invention is measured as follows. 2.5 g of the resin and 47.5 g of ethyl acetate are fed in a 100-ml sample tube. The sample tube is stirred with a revolution rate of 50 rpm at 22°C for 12 hours, and then, allowed to stand at 22°C for another 12 hours. After standing, 5 g of the supernatant in the sample tube is dried at 150°C for an hour and weighed (Xg), and the gel portion is calculated according to the following equation.

$$\text{Gel portion (\%)} = ((2.5 / 50 - X / 5) / (2.5 / 50)) \times 100$$

Furthermore, the same measurement can be performed by using THF instead of ethyl acetate, and the result is referred to as the THF insoluble portion (%).

The binder resin for a toner according to present invention preferably has the weight ratio (C)/(D) of the crosslinked resin (C) to the vinyl polymer (D) of from 20/80 to 80/20. (C)/(D) is particularly preferably from 40/60 to 60/40. The weight ratio of the crosslinked resin (C) to the vinyl polymer (D) is preferably from 80/20 to 90/10 and the vinyl polymer (D) is preferably a vinyl polymer (D1) having a weight average molecular weight of not less than 4,000 and not more than 50,000 as well.

With the content of the crosslinked resin (C) within the above range, it is preferable from the viewpoint that the binder resin comprises the gel component in an appropriate amount, thereby exhibiting sufficient offset resistance and fixing properties.

The weight average molecular weight of the vinyl polymer (D1) is more preferably from 4,000 to 30,000, and particularly preferably from 4,000 to 20,000. When the weight average molecular weight of the vinyl polymer (D1) is within the above range, it is desirable in that a toner with good durability, offset resistance, fixing properties and grindability can be obtained. Thus, appropriate mechanical strength and viscosity of the resin can be achieved.

In order to mix the crosslinked resin (C) with the vinyl polymer (D), any conventional methods can be employed, but a method of using a blender for mixing powder is preferred. Specifically, a method comprising mixing the crosslinked resin (C) with the vinyl polymer (D) by using a Henschel mixer for two minutes can be cited. As the mixing method, melt mixing or the like can also be employed in addition to the method of using the above blender. A known single screw or twin screw extruder may be preferably used.

According to the present invention, a binder resin for a toner having a high level balance between fixing properties and offset resistance, as well as excellent low-temperature fixing properties, can be unexpectedly obtained simply by mixing the vinyl polymer (D) and the crosslinked resin (C) using a Henschel mixer or the like as described above.

The resin thus obtained is cooled and ground to obtain a binder resin for a toner. Any conventional methods for cooling and grinding can be adopted, but as a cooling method, a steel belt cooler can also be used for chilling.

The toner for electrophotography according to the present invention comprises the binder resin for a toner of the present invention as an essential component. In addition to the binder resin, as other components, a colorant, a charge controlling agent, a mold release agent, a pigment dispersant and the like can be cited.

Examples of the colorant include black pigments such as carbon black, acetylene black, lamp black, magnetite and the like, and known organic pigments such as chrome yellow, yellow iron oxide, Yellow G, quinoline yellow lake, permanent yellow NCG, molybdenum orange, Balkan orange, Indanthren, brilliant orange GK, bengala, brilliant carmin 6B, Frizarin lake, methyl violet lake, first violet B, cobalt blue, alkali blue lake, phthalocyanin blue, first skyblue, pigment green B, malachite green lake, titanium oxide, zinc flowers and the like. The amount thereof is preferably from 5 to 250 weight parts, based on 100 weight parts of the binder resin for a toner.

Furthermore, in the ranges in which the object of the present invention is not impaired, some additives may be incorporated into the binder resin, for example, polyvinyl chloride, polyvinyl acetate, polyolefins, polyesters, polyvinylbutyral, polyurethanes, polyamides, rosin, modified rosin, terpene resins, phenol resins, aliphatic hydrocarbon resins, aromatic petroleum resins, paraffin waxes, polyolefin waxes, fatty acid amide waxes, vinyl chloride resins, styrene-butadiene resins, chroman-indene resins, melamine resins and the like. The amount thereof is preferably from 0.1 to 40 weight parts, based on 100 weight parts of the binder resin for a toner.

Further, a known charge controlling agent such as nigrosine, quaternary ammonium salt or metal-containing azo dye can be suitably selected, prior to use. The amount thereof is preferably from 0.1 to 10 weight parts, based on 100 weight parts of the binder resin for a toner.

In the present invention, any conventional methods for manufacturing a toner for electrophotography can be employed. For example, a toner for electrophotography can be obtained by premixing a binder resin for a toner, a colorant, a charge controlling agent, a wax and the like, kneading the mixture in the melt state by the heat using a twin screw kneader, cooling, and then, finely grinding using a grinder, and dispensing using an air type dispenser to gather the particles usually in the range of 8 and 20 $\mu$m. As the heat-melting conditions in the twin screw kneader, the resin temperature at the discharge portion is preferably less than 165°C, and the residence time is preferably less than 180 seconds. Meanwhile, as the cooling method, a steel belt cooler or the like is preferably used for chilling.

The toner for electrophotography thus obtained contains the binder resin for a toner of the present invention preferably in an amount of not less than 50 weight %, and more preferably not less than 60 weight %. The upper limit thereof is preferably 99 weight %.

EXAMPLES

The present invention is now more specifically illustrated below with reference to Examples. However, the present invention is not restricted to these Examples. Also, "parts" hereinafter indicates weight parts unless otherwise mentioned specifically.

[Preparation Examples of a crosslinking agent (A)]

Preparation Example A-1

75 parts of xylene was fed into a flask purged with nitrogen and subjected to temperature elevation to about 140°C. Thereinto was continuously added a mixture in which 65 parts of styrene, 30 parts of n-butyl acrylate, 5 parts of glycidyl methacrylate and 1 part of di-t-butylperoxide were mixed and dissolved in advance under reflux of xylene over 5 hours, and the reflux was continued for another 1-hour. Then, while the internal temperature was maintained at 130°C, 0.5 part of di-t-butylperoxide was added thereto and the reaction was continuously carried out for 2 hours to complete the reaction. Accordingly, a polymerization solution was obtained. The thus-obtained solution was flashed at 160°C in a vessel under 1.33-kPa to remove the solvent or the like to obtain a crosslinking agent A-1. The physical properties are shown in Table 1.

Preparation Example A-2

A crosslinking agent A-2 was obtained in the same manner as in Preparation Example A-1, except that the amount of glycidyl methacrylate used in Preparation Example A-1 was changed to 0.65 part. The physical properties of the obtained substance are shown in Table 3.

Preparation Example A-3

A crosslinking agent A-3 was obtained in the same manner as in Preparation Example A-1, except that the amount of glycidyl methacrylate used in Preparation Example A-1 was changed to 13 parts. The physical properties of the obtained substance are shown in Table 4.

[Preparation Examples of a vinyl polymer (B)]

Preparation Example B-1

3 parts of di-t-butylperoxide per 100 parts of styrene was homogeneously dissolved in a solution comprising 82 parts of styrene, 17 parts of n-butyl acrylate, 1.0 part of methacrylic acid and 75 parts of xylene solvent to obtain a homogeneous solution. The obtained homogenous solution was continuously fed into a 5-L reactor maintained at 190°C of the internal temperature and 6kg/cm$^2$ of the internal pressure, at a rate of 750 ml/hr to obtain a low molecular weight polymerization solution (LS).

Separately, 74.2 parts of styrene, 23.5 parts of n-butyl acrylate and 2.3 parts of methacrylic acid as vinyl monomers were charged in a flask purged with nitrogen, and the internal temperature was raised to 120°C, and bulk polymerization was performed for 10 hours white maintaining the same temperature. At this time, the conversion was 51 %. Subsequently, after adding 50 parts of xylene, a solution of 0.1 part of dibutylperoxide and 60 parts of xylene previously mixed and dissolved was continuously added thereto over 8 hours while maintaining the temperature at 130°C. In addition, 0.2 weight % (based on the total amount of styrene, n-butyl acrylate and methacrylic acid employed) of 1,1-bis(t-butylperoxy)-3,3,5-trimethylcyclohexane was added thereto, and the reaction was continued for another 2 hours. Then, 0.5 weight % (based on the total amount of styrene, n-butyl acrylate and methacrylic acid employed) of 1,1-bis(t-butylperoxy)-3,3,5-trimethylcyclohexane was added thereto, and the resulting mixture was maintained as it was for 2 hours, and diluted with 123.3 parts of xylene to complete the reaction. Accordingly, a high molecular weight polymerization solution (HS) was obtained.

Subsequently, 100 parts of the high molecular weight polymerization solution (HS) and 122 parts of the low molecular weight polymerization solution (LS) were mixed, and the mixture was flashed in a vessel at 190°C under 1.33 kPa to remove the solvent or the like to obtain a vinyl polymer B-1. The physical properties of the obtained vinyl polymer B-1 are shown in Table 1.

Preparation Example B-2

A vinyl polymer B-2 was obtained in the same manner as in Preparation Example B-1, except that the amount of di-t-butylperoxide per 100 parts of styrene was changed to 9.5 parts in the production of the low molecular weight polymerization solution (LS) in Preparation Example B-1. The physical properties of the obtained polymer are shown in Table 1.

Preparation Example B-3

A vinyl polymer B-3 was obtained in the same manner as in Preparation Example B-1, except that the amount of di-t-butylperoxide per 100 parts of styrene was changed to 0.5 part in the production of the low molecular weight polymerization solution (LS) in Preparation Example B-1. The physical properties of the obtained polymer are shown in Table 1.

Preparation Example B-4

A vinyl polymer B-4 was obtained in the same manner as in Preparation Example B-1, except that 77.6 parts of styrene, 17 parts of n-butyl acrylate and 5.4 parts of methacrylic acid were used instead of 82 parts of styrene, 17 parts of n-butyl acrylate and 1.0 part of methacrylic acid in the production of the low molecular weight polymerization solution (LS) in Preparation Example B-1. The physical properties of the obtained polymer are shown in Table 1.

Preparation Example B-5

A vinyl polymer B-5 was obtained in the same manner as in Preparation Example B-1, except that 83 parts of styrene and 17 parts of n-butyl acrylate were used instead of 82 parts of styrene, 17 parts of n-butyl acrylate and 1.0 part of methacrylic acid in the production of the low molecular weight polymerization solution (LS) in Preparation Example B-1. The physical properties of the obtained polymer are shown in Table 1.

Preparation Example B-6

A vinyl polymer B-6 was obtained in the same manner as in Preparation Example B-1, except that 75 parts of xylene was fed into a flask purged with nitrogen and subjected to temperature elevation; thereinto was continuously added a mixture in which 67.7 parts of styrene, 30 parts of n-butyl acrylate, 2.3 parts of methacrylic acid and 0.4 part of di-t-butylperoxide were mixed and dissolved in advance under reflux of xylene over 5 hours, and the reflux was continued for another 1 hour; while the internal temperature was maintained at 130°C, 0.2 weight % (based on the total amount of styrene, n-butyl acrylate and methacrylic acid employed) of 1,1-bis(t-butylperoxy)-3,3,5-trimethylcyclohexane was added thereto and the reaction was continuously carried out for 2 hours; then, 0.5 weight % (based on the total amount of styrene, n-butyl acrylate and methacrylic acid employed) of 1,1-bis(t-butylperoxy)-3,3,5-trimethylcyclohexane was further added thereto and the reaction was maintained for 2 hours to complete the reaction and to obtain a polymerization solution, in the production of the high molecular weight polymerization solution (HS) in Preparation Example B-1. The physical properties of the obtained polymer are shown in Table 2.

Preparation Example B-7

A vinyl polymer B-7 was obtained in the same manner as in Preparation Example B-1, except that 76.4 parts of styrene, 23.5 parts of n-butyl acrylate and 0.1 part of methacrylic acid were used instead of 74.2 parts of styrene, 23.5 parts of n-butyl acrylate and 2.3 parts of methacrylic acid in the production of the high molecular weight polymerization solution (HS) in Preparation Example B-1. The physical properties of the obtained polymer are shown in Table 2.

Preparation Example B-8

A vinyl polymer B-8 was obtained in the same manner as in Preparation Example B-1, except that 61.5 parts of styrene, 23.5 parts of n-butyl acrylate and 15 parts of methacrylic acid were used instead of 74.2 parts of styrene, 23.5 parts of n-butyl acrylate and 2.3 parts of methacrylic acid in the production of the high molecular weight polymerization solution (HS) in Preparation Example B-1. The physical properties of the obtained polymer are shown in Table 2.

Preparation Example B-9

A vinyl polymer B-9 was obtained in the same manner as in Preparation Example B-1, except that 16 parts of the high molecular weight polymerization solution (HS) and 166 parts of the low molecular weight polymerization solution (LS) used in Preparation Example B-1 were used. The physical properties of the obtained polymer are shown in Table 2.

Preparation Example B-10

A vinyl polymer B-10 was obtained in the same manner as in Preparation Example B-1, except that 116 parts of the high molecular weight polymerization solution (HS) and 88 parts of the low molecular weight polymerization solution (LS) used in Preparation Example B-1 were used. The physical properties of the obtained polymer are shown in Table 2.

Preparation Example B-11

A vinyl polymer B-11 was obtained in the same manner as in Preparation Example B-1, except that 14.5 parts of di-t-butylperoxide per 100 parts of styrene was used in the production of the low molecular weight polymerization solution (LS) in Preparation Example B-1. The physical properties of the obtained polymer are shown in Table 5.

Preparation Example B-12

A vinyl polymer B-12 was obtained in the same manner as in Preparation Example B-1, except that 0.3 part of di-t-butylperoxide per 100 parts of styrene was used in the production of the low molecular weight polymerization solution (LS) in Preparation Example B-1. The physical properties of the obtained polymer are shown in Table 5.

Preparation Example B-13

A vinyl polymer B-13 was obtained in the same manner as in Preparation Example B-1, except that 82 parts of styrene, 17 parts of n-butyl acrylate and 6.2 parts of methacrylic acid were used instead of 82 parts of styrene, 17 parts of n-butyl acrylate and 1.0 part of methacrylic acid in the production of the low molecular weight polymerization solution (LS) in Preparation Example B-1. The physical properties of the obtained polymer are shown in Table 5.

Preparation Example B-14

A vinyl polymer B-14 was obtained in the same manner as in Preparation Example B-1, except that 75 parts of xylene was fed into a flask purged with nitrogen and subjected to temperature elevation; thereinto was continuously added a mixture in which 70 parts of styrene, 30 parts of n-butyl acrylate, 0.6 part of di-t-butylperoxide were mixed and dissolved in advance under reflux of xylene over 5 hours, and the reflux was continued for another 1 hour; while the internal temperature was maintained at 130°C, 0.2 weight % (based on the total amount of styrene, n-butyl acrylate and methacrylic acid employed) of 1,1-bis(t-butylperoxy)-3,3,5-trimethylcyclohexane was added thereto and the reaction was continuously carried out for 2 hours; then, 0.5 weight % (based on the total amount of styrene, n-butyl acrylate and methacrylic acid employed) of 1,1-bis(t-butylperoxy)-3,3,5-trimethylcyclohexane was further added and the reaction was maintained for 2 hours to complete the reaction and to obtain a polymerization solution, in the production of the high molecular weight polymerization solution (HS) in Preparation Example B-1. The physical properties of the obtained polymer are shown in Table 5.

Preparation Example B-15

A vinyl polymer B-15 was obtained in the same manner as in Preparation Example B-1, except that 76.2 parts of styrene, 23.5 parts of n-butyl acrylate and 0.3 part of methacrylic acid were used instead of 76.5 parts of styrene and 23.5 parts of n-butyl acrylate in the production of the high molecular weight polymerization solution (HS) in Preparation Example B-1. The physical properties of the obtained polymer are shown in Table 5.

Preparation Example B-16

A vinyl polymer B-16 was obtained in the same manner as in Preparation Example B-1, except that 53.5 parts of styrene, 23.5 parts of n-butyl acrylate and 23 parts of methacrylic acid were used instead of 74.2 parts of styrene, 23.5 parts of n-butyl acrylate and 2.3 parts of methacrylic acid in the production of the high molecular weight polymerization solution (HS) in Preparation Example B-1. The physical properties of the obtained polymer are shown in Table 6.

Preparation Example B-17

A vinyl polymer B-17 was obtained in the same manner as in Preparation Example B-1, except that 10 parts of the high molecular weight polymerization solution (HS) and 170 parts of the low molecular weight polymerization solution (LS) used in Preparation Example B-1 were used. The physical properties of the obtained polymer are shown in Table 6.

Preparation Example B-18

A vinyl polymer B-18 was obtained in the same manner as in Preparation Example B-1, except that 183 parts of the high molecular weight polymerization solution (HS) and 79 parts of the low molecular weight polymerization solution (LS) used in Preparation Example B-1 were used. The physical properties of the obtained polymer are shown in Table 6.

Preparation Example B-19

A vinyl polymer B-19 was obtained in the same manner as in Preparation Example B-1, except that 9.5 parts of di-t-butylperoxide per 100 parts of styrene in the production of the low molecular weight polymerization solution (LS), 0 part of the high molecular weight polymerization solution (HS) and 175 parts of the low molecular weight polymerization solution (LS) were used in Preparation Example B-1. The physical properties of the obtained polymer are shown in Table 4.

Preparation Example B-20

A vinyl polymer B-20 was obtained in the same manner as in Preparation Example B-1, except that 0.5 part of di-t-butylperoxide per 100 parts of styrene in the production of the low molecular weight polymerization solution (LS), 0 part of the high molecular weight polymerization solution (HS) and 175 parts of the low molecular weight polymerization solution (LS) were used in Preparation Example B-1. The physical properties of the obtained polymer are shown in Table 4.

[Preparation Examples of a crosslinked resin (C)]

Preparation Example C-1

8 parts of the crosslinking agent A-1 and 92 parts of the vinyl polymer B-1 were mixed in a Henschel mixer, and then, the mixture was reacted by using a twin screw kneader (KEXN S-40 type, manufactured by Kurimoto, Ltd.) at 200°C of the resin temperature at the discharge portion of the twin screw kneader for 90 seconds of the residence time.

Then, the reaction mixture was cooled and ground to obtain a crosslinked resin C-1. Cooling was carried out by using a steel belt cooler (NR3-Hi Double Cooler, manufactured by Nippon Belting Co., Ltd.), under the conditions of the cooling water temperature of 10°C, the cooling rate of 90 L/min and the belt speed of 6 m/min. The physical properties of the obtained resin are shown in Table 1.

Preparation Examples C-2 to C-24

Crosslinked resins C-2 to C-24 were obtained in the same manner as in Preparation Example C-1, except that the type and amount of the crosslinking agents and the vinyl polymers as shown in Table 1 to Table 6 were used. The physical properties of the obtained resins are shown in Table 1 to Table 6.

Example 1

50 parts of the crosslinked resin C-1 and 50 parts of the vinyl polymer B-1 were mixed in a Henschel mixer for 2 minutes to obtain a binder resin for a toner. Then, 8 parts of carbon black MA100 (a product of Mitsubishi Kasei Kogyo), 5 parts of polypropylene wax (Viscol 550P) and 1 part of Eisenspiron Black TRH as a charge controlling agent were added thereto, and the resulting mixture was further mixed by using a Henschel mixer and kneaded in a twin screw kneader (PCM-30 type, manufactured by Ikegai Corporation) at 150°C of the resin temperature at the discharge portion of the twin screw kneader for 30 seconds of the residence time. After cooling, grinding and dispensing, a toner of about 7 μm was obtained. Cooling was performed in the same manner as in Preparation Example C-1. 3 parts of the toner were mixed with 97 parts of a carrier to obtain a developing agent, with which an image was drawn by using a copier produced by remodeling a commercial high-speed copier. The results thus evaluated are shown in Table 1.

Examples 2 to 19 and Comparative Examples 1 to 15

Binder resins for a toner and toners were obtained in the same manner as in Example 1, except that the type and amount of the crosslinked resins and the vinyl polymers as shown in Table 1 to Table 6 were used. Performances thereof were evaluated. The results of the Examples are shown in Table 1 to Table 4, and those of the Comparative Examples in Table 5 and Table 6.

<Method of evaluating a toner>

1) Fixing properties

Copy was performed at a rate of 72 sheets/min with the temperature of the fixing roll being changed at intervals of 5°C and by making a sand eraser ("MONO", a plastic sand eraser, manufactured by Tombow Pencil Co., Ltd.) run back and forth 10 times between a solid black portion and a white paper with a force of 1 kgf. Blackness of the solid black portion was measured by using an ink densitometer, and the existing ratio of the toner was expressed as a concentration ratio. A temperature at which not less than 60% of the toner was remaining was evaluated as the minimum temperature.

  ◎: not more than 150°C
  ○: more than 150°C and not more than 160°C
  Δ: more than 160°C and not more than 170°C
  x: more than 170°C

2) Offset resistance

A temperature of the fixing roll at which offset occurred during photocopying was evaluated for offset resistance.

  ◎: not less than 230°C
  ○: not less than 220°C and less than 230°C
  Δ: not less than 210°C and less than 220°C
  x: less than 210°C

3) Grindability

Some of the material -kneaded by a twin screw kneader and cooled was sampled during the preparation of a toner, and the sample was homogeneously ground by the use of a jet mill to a particle size with 10-mesh under and 16-mesh on. The particle-size distribution was measured by the use of a coulter counter to obtain the proportion of the particle size between 5 $\mu$m and 20 $\mu$m.

◎: not less than 85%
○: not less than 70% and less than 85%
Δ: not less than 50% and less than 70%
x: less than 50%

4) Development durability

The development durability of a toner was evaluated by conducting continuous copying of 10,000 copies by using a commercial high-speed copier (copy speed of 72 sheets/min) using the toner thus obtained, and then by copying a base paper with lines having a width of 100 $\mu$m. The stencil paper was observed by using a microscope laid on a paper in advance, and measured by 5-grade evaluation. The copied paper after copying and fixing the paper was also measured with the line width by 5-point evaluation. The average of the line width of the stencil paper and that of the copied paper were obtained respectively, and the evaluation was made as follows, depending on the difference of line width of the stencil paper and that of the copied paper.
Increase of the line width δ = (line width of copied paper) - (line width of stencil paper)

○: δ < 5 $\mu$m
Δ: 5 $\mu$m ≤ δ < 10 $\mu$m
x: 10 $\mu$m ≤ δ

[Table 1]

|  | Example 1 | Example 2 | Example 3 | Example 4 | Example 5 |
|---|---|---|---|---|---|
| Crosslinked resin (C) | C-1 | C-2 | C-3 | C-4 | C-5 |
| Crosslinking agent (A) | A-1 | A-1 | A-1 | A-1 | A-1 |
| Crosslinking agent (A) weight average molecular weight | 50000 | 50000 | 50000 | 50000 | 50000 |
| Crosslinking agent (A) epoxy value (Eq/100g) | 0.035 | 0.035 | 0.035 | 0.035 | 0.035 |
| Vinyl polymer (B) | B-1 | B-2 | B-3 | B-4 | B-5 |
| Weight ratio (B/A) | 92/8 | 92/8 | 92/8 | 92/8 | 92/8 |
| Gel portion (weight %) | 25 | 23 | 28 | 30 | 20 |
| THF insoluble portion (weight %) | 15 | 13.8 | 16.8 | 18 | 12 |
| Vinyl polymer (L) weight average molecular weight | 12000 | 4000 | 50000 | 12000 | 12000 |
| Vinyl polymer (L) Functional group content (mol/kg) | 0.12 | 0.12 | 0.12 | 0.63 | 0 |
| Vinyl polymer (H) weight average molecular weight | 300000 | 300000 | 300000 | 300000 | 300000 |
| Vinyl polymer (H) Functional group content (mol/Kg) | 0.27 | 0.27 | 0.27 | 0.27 | 0.27 |
| Weight ratio (H/L) | 30/70 | 30/70 | 30/70 | 30/70 | 30/70 |
| Vinyl resin (D) | B-1 | B-2 | B-3 | B-4 | B-5 |
| Weight average molecular weight (D) | 150000 | - | - | - | - |
| Weight ratio (C/D) | 50/50 | 50/50 | 50/50 | 50/50 | 50/50 |
| Fixing properties | ◎ | ◎ | Δ | Δ | ◎ |

Table continued

| | Example 1 | Example 2 | Example 3 | Example 4 | Example 5 |
|---|---|---|---|---|---|
| Offset resistance | ◎ | Δ | ◎ | ◎ | ○ |
| Grindability | ◎ | ◎ | Δ | ◎ | ◎ |
| Development durability | ○ | Δ | ○ | Δ | Δ |

[Table 2]

| | Example 6 | Example 7 | Example 8 | Example 9 | Example 10 |
|---|---|---|---|---|---|
| Crosslinked resin (C) | C-6 | C-7 | C-8 | C-9 | C-10 |
| Crosslinking agent (A) | A-1 | A-1 | A-1 | A-1 | A-1 |
| Crosslinking agent (A) weight average molecular weight | 50000 | 50000 | 50000 | 50000 | 50000 |
| Crosslinking agent (A) epoxy value (Eq/100g) | 0.035 | 0.035 | 0.035 | 0.035 | 0.035 |
| Vinyl polymer (B) | B-6 | B-7 | B-8 | B-9 | B-10 |
| Weight ratio (B/A) | 92/8 | 92/8 | 92/8 | 92/8 | 92/8 |
| Gel portion (weight %) | 18 | 17 | 35 | 8 | 36 |
| THF insoluble portion (weight %) | 10.8 | 10 0 | 21 | 5 | 22 |
| Vinyl polymer (L) weight average molecular weight | 12000 | 12000 | 12000 | 12000 | 12000 |
| Vinyl polymer (L) Functional group content (mol/Kg) | 0.12 | 0.12 | 0.12 | 0.12 | 0.12 |
| Vinyl polymer (H) weight average molecular weight | 55000 | 300000 | 300000 | 300000 | 300000 |
| Vinyl polymer (H) Functional group content (mol/Kg) | 0.27 | 0.12 | 1.9 | 0.27 | 0.27 |
| Weight ratio (H/L) | 30/70 | 30/70 | 30/70 | 5/95 | 50/50 |
| Vinyl resin (D) | B-6 | B-7 | B-8 | B-9 | B-10 |
| Weight average molecular weight (D) | - | - | - | - | - |
| Weight ratio (C/D) | 50/50 | 50/50 | 50/50 | 50/50 | 50 / 50 |
| Fixing properties | ◎ | ◎ | Δ | ◎ | Δ |
| Offset resistance | Δ | Δ | ◎ | Δ | ◎ |
| Grindability | ◎ | ◎ | Δ | ◎ | Δ |
| Development durability | Δ | Δ | ○ | ○ | ○ |

[Table 3]

| | Example 11 | Example 12 | Example 13 | Example 14 | Example 15 |
|---|---|---|---|---|---|
| Crosslinked resin (C) | C-1 | C-1 | C-11 | C-12 | C-13 |
| Crosslinking agent (A) | A-1 | A-1 | A-1 | A-1 | A-2 |
| Crosslinking agent (A) weight average molecular weight | 50000 | 50000 | 50000 | 50000 | 50000 |

Table continued

| | Example 11 | Example 12 | Example 13 | Example 14 | Example 15 |
|---|---|---|---|---|---|
| Crosslinking agent (A) epoxy value (Eq/100g) | 0.035 | 0.035 | 0.035 | 0.035 | 0.005 |
| Vinyl polymer (B) | B-1 | B-1 | B-1 | B-1 | B-1 |
| Weight ratio (B/A) | 92 / 8 | 92 / 8 | 98 / 2 | 75 / 25 | 92 / 8 |
| Gel portion (weight %) | 5 | 36 | 1 | 50 | 3 |
| THF insoluble portion (weight %) | 3 | 22 | 0.6 | 29 | 2 |
| Vinyl polymer (L) weight average molecular weight | 12000 | 12000 | 12000 | 12000 | 12000 |
| Vinyl polymer (L) Functional group content (mol/Kg) | 0.12 | 0.12 | 0.12 | 0.12 | 0.12 |
| Vinyl polymer (H) weight average molecular weight | 300000 | 300000 | 300000 | 300000 | 300000 |
| Vinyl polymer (H) Functional group content (mol/kg) | 0.27 | 0.27 | 0.27 | 0.27 | 0.27 |
| Weight ratio (H/L) | 30 / 70 | 50 / 50 | 30 / 70 | 30 / 70 | 30/70 |
| Vinyl resin (D) | B-1 | B-1 | B-1 | B-1 | B-1 |
| Weight average molecular weight (D) | 150000 | 150000 | 150000 | 150000 | 150000 |
| Weight ratio (C/D) | 20/80 | 80 / 20 | 50/50 | 50 / 50 | 50 / 50 |
| Fixing properties | ◎ | Δ | ◎ | Δ | ◎ |
| Offset resistance | Δ | ◎ | Δ | ◎ | Δ |
| Grindability | ◎ | Δ | ◎ | Δ | ◎ |
| Development durability | ○ | ○ | ○ | ○ | ○ |

[Table 4]

| | Example 16 | Example 17 | Example 18 | Example 19 |
|---|---|---|---|---|
| Crosslinked resin (C) | C-14 | C-15 | C-15 | C-15 |
| Crosslinking agent (A) | A-3 | A-1 | A-1 | A-1 |
| Crosslinking agent (A) weight average molecular weight | 50000 | 50000 | 50000 | 50000 |
| Crosslinking agent (A) epoxy value (Eq/100g) | 0.092 | 0.035 | 0.035 | 0.035 |
| Vinyl polymer (B) | B-1 | B-1 | B-1 | B-1 |
| Weight ratio (B/A) | 92/8 | 92/8 | 92/8 | 92/8 |
| Gel portion (weight %) | 12 | 25 | 25 | 25 |
| THF insoluble portion (weight %) | 7 | 15 | 15 | 15 |
| Vinyl polymer (L) weight average molecular weight | 12000 | 12000 | 12000 | 12000 |
| Vinyl polymer (L) Functional group content (mol/Kg) | 0.12 | 0.12 | 0.12 | 0.12 |
| Vinyl polymer (H) weight weight average molecular weight | 300000 | 300000 | 300000 | 300000 |
| Vinyl polymer (H) Functional group content (mol/Kg) | 0.27 | 0.27 | 0.27 | 0.27 |
| Weight ratio (H/L) | 30/70 | 40/60 | 40/60 | 40/60 |

Table continued

| | Example 16 | Example 17 | Example 18 | Example 19 |
|---|---|---|---|---|
| Vinyl resin (D) | B-1 | B-19 | B-20 | B-19 |
| Weight average molecular weight (D) | 150000 | 4000 | 50000 | 4000 |
| Weight ratio (C/D) | 50/50 | 80/20 | 80/20 | 90/10 |
| Fixing properties | ○ | ◎ | ○ | Δ |
| Offset resistance | ○ | ○ | ◎ ◎ | |
| Grindability | ○ | ◎ | Δ | ◎ |
| Development durability | Δ | ○ | ○ | ○ |

[Table 5]

| | Comparative Example 1 | Comparative Example 2 | Comparative Example 3 | Comparative Example 4 | Comparative Example 5 |
|---|---|---|---|---|---|
| Crosslinked resin (C) | C-15 | C-16 | C-17 | C-18 | C-19 |
| Crosslinking agent (A) | A-1 | A-1 | A-1 | A-1 | A-1 |
| Crosslinking agent (A) weight average molecular weight | 50000 | 50000 | 50000 | 50000 | 50000 |
| Crosslinking agent (A) epoxy value (Eq/100g) | 0.035 | 0.035 | 0.035 | 0.035 | 0.035 |
| Vinyl polymer (B) | B-11 | B-12 | B-13 | B-14 | B-15 |
| Weight ratio (B/A) | 92/8 | 92/8 | 92/8 | 92/8 | 92/8 |
| Gel portion (weight %) | 22 | 30 | 32 | 16 | 15 |
| THF insoluble portion (weight %) | 13 | 18 | 19 | 10 | 9 |
| Vinyl polymer (L) weight average molecular weight | 3000 | 60000 | 12000 | 12000 | 12000 |
| Vinyl polymer (L) Functional group content (mol/Kg) | 0.12 | 0.12 | 0.72 | 0.12 | 0.12 |

Table continued

| | Comparative Example 1 | Comparative Example 2 | Comparative Example 3 | Comparative Example 4 | Comparative Example 5 |
|---|---|---|---|---|---|
| Vinyl polymer (H) weight average molecular weight | 300000 | 300000 | 300000 | 40000 | 300000 |
| Vinyl polymer (H) Functional group content (mol/Kg) | 0.27 0.27 | 0.27 0.27 | 0.27 0.27 | 0.27 0.27 | 0.05 0.05 |
| Weight ratio (H/L) | 30/70 | 30/70 | 30/70 | 30/70 | 30/70 |
| Vinyl resin (D) | B-11 | B-12 | B-13 | B-14 | B-15 |
| Weight average molecular weight (D) | - | - | - | - | - |
| Weight ratio (C/D) | 50/50 | 50/50 | 50/50 | 50 / 50 | 50/50 |
| Fixing properties | ◎ | X | X | ◎ | ◎ |
| Offset resistance | X | ◎ | ◎ | X | X |
| Grindability | ◎ | X | ◎ | ◎ | ◎ |
| Development durability | X | △ | △ | X | △ |

[Table 6]

| | Comparative Example 6 | Comparative Example 7 | Comparative Example 8 | Comparative Example 9 | Comparative Example 10 |
|---|---|---|---|---|---|
| Crosslinked resin (C) | C-20 | C-21 | C-22 | C-23 | C-24 |
| Crosslinking agent (A) | A-1 | A-1 | A-1 | A-1 | A-1 |
| Crosslinking agent (A) weight average molecular weight | 50000 | 50000 | 50000 | 50000 | 50000 |
| Crosslinking agent (A) epoxy value (Eq/100g) | 0.035 | 0.035 | 0.035 | 0.035 | 0.035 |
| Vinyl polymer (B) | B-16 | B-17 | B-18 | B-1 | B-1 |

Table continued

| | Comparative Example 6 | Comparative Example 7 | Comparative Example 8 | Comparative Example 9 | Comparative Example 10 |
|---|---|---|---|---|---|
| Weight ratio (B/A) | 92/8 | 92/8 | 92/8 | 100/0 | 70/30 |
| Gel portion (weight %) | 38 | 5 | 40 | 0 | 55 |
| THF insoluble portion (weight %) | 23 | 3 | 24 | 0 | 33 |
| Vinyl polymer (L) weight average molecular weight | 12000 | 12000 | 12000 | 12000 | 12000 |
| Vinyl polymer (L) Functional group content (mol/Kg) | 0.12 | 0.12 | 0.12 | 0.12 | 0.12 |
| Vinyl polymer (H) weight average molecular weight | 300000 | 300000 | 300000 | 300000 | 300000 |
| Vinyl polymer (H) Functional group content (mol/Kg) | 2.6 | 0.27 | 0.27 | 0.27 | 0.27 |
| Weight ratio (H/L) | 30/70 | 3/97 | 55/45 | 30/70 | 30/70 |
| Vinyl resin (D) | B-16 | B-17 | B-18 | B-1 | B-1 |
| Weight average molecular weight (D) | - | - | - | 150000 | 150000 |
| Weight ratio (C/D) | 50/50 | 50/50 | 50/50 | 50/50 | 50/50 |
| Fixing properties | X | ◎ | X | ◎ | X |
| Offset resistance | ◎ | X | ◎ | X | ◎ |
| Grindability | X | ◎ | X | ◎ | X |
| Development durability | O | O | O | O | O |

The present inventors have conducted an extensive study and as a result, have found a method to obtain a binder resin for a toner exhibiting superior low-temperature fixing properties and excellent offset resistance, by specifying the molecular weights, contents of functional groups, and proportions of the vinyl polymer (H) and the vinyl polymer (L) respectively, as well as the gel portion produced and mixed ratio of the vinyl polymer (D) and the crosslinked resin (C) containing gel. In addition, the toners using the binder resin for a toner according to the present invention, as shown in Table 1 to Table 4, exhibit excellent grindability and development durability, thus providing excellent practical performances.

**Claims**

1. A binder resin for a toner comprising a crosslinked resin (C) which is obtained by the reaction of a crosslinking agent (A) with a vinyl polymer (B) satisfying the requirements (I) to (III) as described below, and contains a gel portion of from 1 to 50%, and a vinyl polymer (D).

   (I) The vinyl polymer (B) comprises a vinyl polymer (H) and a vinyl polymer (L), and the weight ratio (H)/(L) is from 5/95 to 50/50.
   (II) The vinyl polymer (H) has a weight average molecular weight of more than 50,000 and not more than 1,000,000, and the content of the functional group selected from an OH group, a COOH group, an acid anhydride group and an amino group of from 0.1 to 2 mole per 1 kg of the vinyl polymer (H).
   (III) The vinyl polymer (L) has a weight average molecular weight of not less than 4,000 and not more than 50,000, and the content of the functional group selected from an OH group, a COOH group, an acid anhydride group and an amino group of less than 0.7 mole per 1 kg of the vinyl polymer (L).

2. The binder resin for a toner according to claim 1, wherein the weight ratio (C)/(D) of the crosslinked resin (C) to the vinyl polymer (D) is from 20/80 to 80/20.

3. The binder resin for a toner according to claim 1, wherein the weight ratio (C)/(D) of the crosslinked resin (C) to the vinyl polymer (D) is from 80/20 to 90/10, and the vinyl polymer (D) is a vinyl polymer (D1) having a weight average molecular weight of not less than 4,000 and not more than 50,000.

4. The binder resin for a toner according to claim 1, wherein the crosslinking agent (A) is a glycidyl group-containing vinyl resin (A1 ) having the epoxy value of from 0.005 to 0.1 equivalent/100 g.

5. The binder resin for a toner according to claim 1, wherein the vinyl polymer (B) and the vinyl polymer (D) are each a styrene acrylic type resin.

6. A toner for electrophotography comprising the binder resin for a toner as described in claim 1.

## INTERNATIONAL SEARCH REPORT

| | International application No. |
|---|---|
| | PCT/JP2004/007663 |

| A. CLASSIFICATION OF SUBJECT MATTER |
|---|
| Int.Cl$^7$  G03G9/087, C08J3/24 |

According to International Patent Classification (IPC) or to both national classification and IPC

| B. FIELDS SEARCHED |
|---|
| Minimum documentation searched (classification system followed by classification symbols) |
| Int.Cl$^7$  G03G9/087, C08J3/24 |

Documentation searched other than minimum documentation to the extent that such documents are included in the fields searched

| Jitsuyo Shinan Koho | 1922–1996 | Jitsuyo Shinan Toroku Koho | 1996–2004 |
|---|---|---|---|
| Kokai Jitsuyo Shinan Koho | 1971–2004 | Toroku Jitsuyo Shinan Koho | 1994–2004 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | JP 2002-221813 A  (Canon Inc.),<br>09 August, 2002 (09.08.02),<br>Full text<br>& US 20020098431 A | 1-6 |
| Y | JP 9-244295 A  (Sekisui Chemical Co., Ltd.),<br>19 September, 1997 (19.09.97),<br>Full text<br>(Family: none) | 1-6 |
| Y | JP 61-163347 A  (Hitachi Kasei Kabushiki Kaisha),<br>24 July, 1986 (24.07.86),<br>Full text<br>(Family: none) | 1-6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 September, 2004 (07.09.04) | 26 October, 2004 (26.10.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2004/007663 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2003-241427 A (Canon Inc.), 27 August, 2003 (27.08.03), Full text (Family: none) | 1-6 |
| Y | JP 6-11890 A (Mitsui Toatsu Chemicals, Inc.), 21 January, 1994 (21.01.94), Full text & EP 555022 A & US 3570958 A | 1-6 |
| Y | JP 2001-188383 A (Canon Inc.), 10 July, 2001 (10.07.01), Full text (Family: none) | 1-6 |

Form PCT/ISA/210 (continuation of second sheet) (January 2004)